(19) Europäisches Patentamt
European Patent Office
Office européen des brevets

(11) EP 3 086 592 A1

(12) **EUROPEAN PATENT APPLICATION**
published in accordance with Art. 153(4) EPC

(43) Date of publication:
26.10.2016 Bulletin 2016/43

(51) Int Cl.:
*H04W 24/08* (2009.01)   *H04W 16/18* (2009.01)
*H04W 24/10* (2009.01)   *H04W 64/00* (2009.01)

(21) Application number: 14871268.0

(22) Date of filing: 18.12.2014

(86) International application number:
PCT/JP2014/083512

(87) International publication number:
WO 2015/093556 (25.06.2015 Gazette 2015/25)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 20.12.2013 JP 2013264614

(71) Applicant: Kyocera Corporation
Kyoto-shi
Kyoto 612-8501 (JP)

(72) Inventor: ADACHI, Hiroyuki
Kyoto-shi
Kyoto 612-8501 (JP)

(74) Representative: Schwabe - Sandmair - Marx
Patentanwälte Rechtsanwalt
Partnerschaft mbB
Joseph-Wild-Straße 20
81829 München (DE)

(54) **MEASUREMENT CONTROL METHOD**

(57) A measurement control method according to a first embodiment is a method for measuring a delay (latency) of a downlink packet transmitted from eNB 200 to UE 100 in LTE system. The measurement control method includes steps of: in the eNB 200, receiving location information indicating a geographical location of the UE 100, from the UE 100; measuring a downlink packet delay indicating a duration from a first time point at which the downlink packet has been generated to a second time point at which transmission confirmation corresponding to the downlink packet has been received from the UE 100; and generating delay measurement information including the downlink packet delay and the location information by associating the downlink packet delay with the location information.

FIG. 6

**Description**

TECHNICAL FIELD

The present invention relates to a measurement control method used in a mobile communication system.

BACKGROUND ART

In a mobile communication system, if a building is constructed around a base station, or the installation situation of surrounding base stations changes, the radio environment relating to the base station changes. Thus, a drive test has been conventionally performed by an operator in the following manner. Using a measurement vehicle on which a measurement equipment is mounted, the operator measures radio environment and location information to collect a measurement log. Here, the radio environment refers to reference signal received power (RSRP) received from the base station, or the like.

While such measurement and collection can contribute to, for example, the optimization of a coverage, there is a problem of involving many man-hours and high cost. Thus, in the 3rd Generation Partnership Project (3GPP), which is a mobile communication system standardization project, the specification of Minimization of Drive Tests (MDT) for automating the measurement and collection using a user terminal is formulated (refer to Non Patent Literature 1).

CITATION LIST

NON PATENT LITERATURE

Non Patent Literature 1: 3GPP Technical Report "TS37.320 V11.3.0" March 2013

SUMMARY OF INVENTION

Nevertheless, the RSRP or the like that is collected through the MDT is an index indicating communication quality in a physical layer, and is not an index directly indicating communication quality in an upper layer, that is, quality of service (QoS). Even though the communication quality in the physical layer is high, if the QoS is low, user demand cannot be satisfied.

Among QoS indicators, a packet delay (latency) is a quality indicator that a user can sense particularly easily. It is therefore desired to make the packet delay evaluable.

Thus, an object of the present invention is to provide a measurement control method that enables delay measurement information to be collected through the MDT.

A measurement control method according to a first aspect is a method for measuring a delay of a downlink packet transmitted from a network to a user terminal in a mobile communication system. The measurement control method includes steps of: in the network, receiving location information indicating a geographical location of the user terminal, from the user terminal; measuring a downlink packet delay indicating a duration from a first time point at which the downlink packet has been generated to a second time point at which transmission confirmation corresponding to the downlink packet has been received from the user terminal; and generating delay measurement information including the downlink packet delay and the location information by associating the downlink packet delay with the location information.

A measurement control method according to a second aspect is a method for measuring a delay of an uplink packet transmitted from a user terminal to a network in a mobile communication system. The measurement control method includes steps of: in the network, receiving a buffer state report indicating a data amount of the uplink packet accumulated in a buffer of the user terminal, from the user terminal; and measuring an uplink packet delay indicating a duration from a first time point at which the buffer state report has been received to a second time point. The second time point is a time point at which transmission confirmation has been transmitted to the user terminal in response to a data amount received from the user terminal reaching the data amount indicated by the buffer state report.

A measurement control method according to a third aspect is a method for measuring a delay of an uplink packet transmitted from a user terminal to a network in a mobile communication system. The measurement control method includes steps of: in the user terminal, measuring an uplink packet delay indicating a duration from a first time point subsequent to a timing at which the uplink packet has been generated to a second time point at which transmission confirmation corresponding to the uplink packet has been received from the network; generating delay measurement information including the uplink packet delay; and transmitting the delay measurement information to the network.

BRIEF DESCRIPTION OF DRAWINGS

Fig. 1 is a configuration diagram of a Long Term Evolution (LTE) system according to first to third embodiments.

Fig. 2 is a block diagram of a user equipment (UE) according to the first to third embodiments.

Fig. 3 is a block diagram of an evolved Node-B (eNB) according to the first to third embodiments.

Fig. 4 is a protocol stack diagram of a radio interface according to the first to third embodiments.

Fig. 5 is a configuration diagram of a radio frame according to the first to third embodiments.

Fig. 6 is a sequence diagram illustrating an operation sequence according to the first embodiment.

Fig. 7 is a sequence diagram illustrating an operation sequence according to the second embodiment.

Fig. 8 is a sequence diagram illustrating an operation performed in a case in which an uplink packet with low priority is generated in a measurement control method according to the second embodiment.

Fig. 9 is a flowchart illustrating an operation of a UE according to a modified example of the second embodiment.

Fig. 10 is a diagram illustrating a configuration example of a new buffer state report (BSR) format for a BSR for MDT according to the modified example of the second embodiment.

Fig. 11 is a sequence diagram illustrating an operation sequence according to the third embodiment.

DESCRIPTION OF EMBODIMENTS

[Overview of Embodiments]

A measurement control method according to a first embodiment is a method for measuring a delay of a downlink packet transmitted from a network to a user terminal in a mobile communication system. The measurement control method includes steps of: in the network, receiving location information indicating a geographical location of the user terminal, from the user terminal; measuring a downlink packet delay indicating a duration from a first time point at which the downlink packet has been generated to a second time point at which transmission confirmation corresponding to the downlink packet has been received from the user terminal; and generating delay measurement information including the downlink packet delay and the location information by associating the downlink packet delay with the location information.
In the first embodiment, the measurement control method further includes a step of, in the network, acquiring time information relating to a measurement timing of the downlink packet delay. The delay measurement information further includes the time information.
A measurement control method according to a second embodiment is a method for measuring a delay of an uplink packet transmitted from a user terminal to a network in a mobile communication system. The measurement control method includes steps of: in the network, receiving a buffer state report indicating a data amount of the uplink packet accumulated in a buffer of the user terminal, from the user terminal; and measuring an uplink packet delay indicating a duration from a first time point at which the buffer state report has been received to a second time point. The second time point is a time point at which transmission confirmation has been transmitted to the user terminal in response to a data amount received from the user terminal reaching the data amount indicated by the buffer state report.
In the first embodiment, the measurement control method further includes steps of: in the network, receiving location information indicating a geographical location of the user terminal, from the user terminal; and generating delay measurement information including the uplink packet delay and the location information by associating the uplink packet delay with the location information.
In the second embodiment, the measurement control method further includes a step of, in the network, acquiring time information relating to a measurement timing of the uplink packet delay. The delay measurement information further includes the time information.
In a modification of the second embodiment, the measurement control method further includes steps of: transmitting, in the network, configuration information for configuring MDT measuring the uplink packet delay, to the user terminal; and transmitting, in the user terminal, a special buffer state report for the MDT as the buffer state report, based on the configuration information.

In the modification of the second embodiment, the special buffer state report includes information indicating a data amount of a new uplink packet with lower priority than that of existing data in the buffer.

In the modification of the second embodiment, the measurement control method further includes the steps of: in the user terminal, managing data amounts accumulated in the buffer for every priority; and transmitting, even in a case in which priority of the new uplink packet is lower than that of existing data in the buffer, the special buffer state report including the information indicating the data amount of the new uplink packet, to the network.

A measurement control method according to a third embodiment is a method for measuring a delay of an uplink packet transmitted from a user terminal to a network in a mobile communication system. The measurement control method includes steps of: in the user terminal, measuring an uplink packet delay indicating a duration from a first time point subsequent to a timing at which the uplink packet has been generated to a second time point at which transmission confirmation corresponding to the uplink packet has been received from the network; generating delay measurement information including the uplink packet delay; and transmitting the delay measurement information to the network.

In the third embodiment, the first time point is a generation time point at which the uplink packet has been generated, or a transmission time point at which a buffer state report reflecting the generated uplink packet has been transmitted to the network.

In the third embodiment, the measurement step includes a step of measuring a transmission delay indicating a duration from the generation time point to the transmission time point. The generation step includes a step of including the transmission delay in the delay measurement information.

In the third embodiment, the measurement control method further includes step of, in the user terminal, acquiring location information indicating a geographical location of the user terminal. The generation step includes a step of generating delay measurement information including the uplink packet delay and the location information by associating the uplink packet delay with the location information.

In the third embodiment, the measurement control method further includes a step of, in the user terminal, acquiring time information relating to a measurement timing of the uplink packet delay. The delay measurement information further includes the time information.

In the third embodiment, the measurement control method further includes a step of, in the network, transmitting configuration information for configuring MDT measuring the uplink packet delay, to the user terminal. The configuration information includes information designating a measurement duration in which measurement of the uplink packet delay is to be performed. The measurement step includes a step of measuring the uplink packet delay in the measurement duration. The transmission step includes a step of transmitting the delay measurement information to the network after an end of the measurement duration.

In the third embodiment, the measurement control method further includes a step of, in the user terminal, in a case of being in a connected state at a time point at which the measurement duration has ended, transmitting a notification for transmitting the delay measurement information, to the network.

In the third embodiment, the measurement control method further includes a step of, in the user terminal, in a case of being in an idle state at a time point at which the measurement duration has ended, transmitting a notification for transmitting the delay measurement information, to the network, when transitioning from the idle state to a connected state.

[First Embodiment]

An embodiment in a case in which the present invention is applied to a Long Term Evolution (LTE) system will be described below.

(System Configuration)

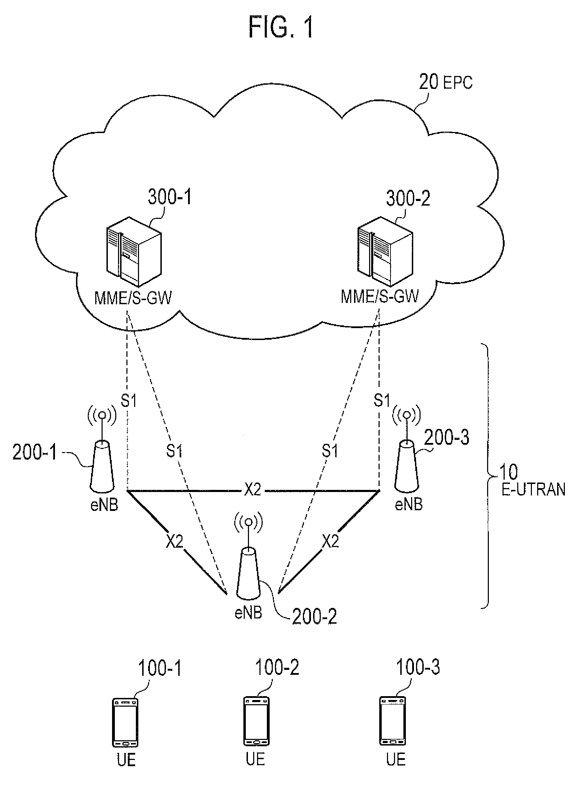

Fig. 1 is a configuration diagram of the LTE system according to the first embodiment. As illustrated in Fig. 1, the LTE system according to the first embodiment includes UEs (User Equipments) 100, E-UTRAN (Evolved Universal Terrestrial Radio Access Network) 10, and EPC (Evolved Packet Core) 20.

The UE 100 corresponds to the user terminal. The UE 100 is a mobile radio communication apparatus and performs radio communication with a cell (a serving cell). The configuration of the UE 100 will be described later.

The E-UTRAN 10 corresponds to a radio access network. The E-UTRAN 10 includes eNBs 200 (evolved Node-Bs). The eNB 200 corresponds to a base station. The eNBs 200 are connected mutually via an X2 interface. The configuration of the eNB 200 will be described later.

The eNB 200 manages one or more cells, and performs radio communication with the UE 100 that establishes a connection with the own cell. The eNB 200, for example, has a radio resource management (RRM) function, a routing function of user data, and a measurement control function for mobility control and scheduling. It is noted that the "cell" is used as a term indicating a minimum unit of a radio communication area, and is also used as a term indicating a function of performing radio communication with the UE 100.

The EPC 20 corresponds to a core network. The E-UTRAN 10 and the EPC 20 forms a network of the LTE system. The EPC 20 includes MME (Mobility Management Entity)/S-GW (Serving-Gateway) 300. The MME performs various mobility controls for the UE 100. The SGW performs transfer control of user data. Furthermore, the MME/S-GW 300 is connected to the eNB 200 via an S1 interface.

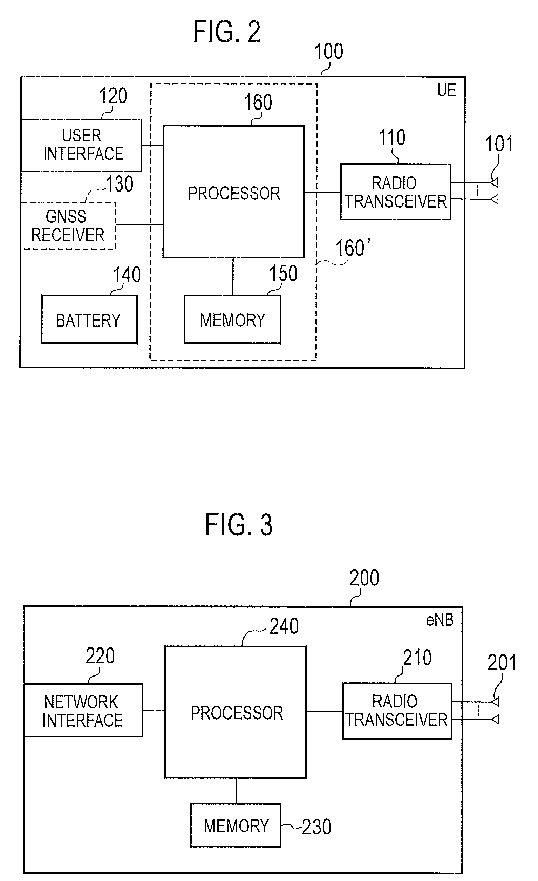

Fig. 2 is a block diagram of the UE 100. As illustrated in Fig. 2, the UE 100 includes a plurality of antennas 101, a radio transceiver 110, a user interface 120, a GNSS (Global Navigation Satellite System) receiver 130, a battery 140, a memory 150, and a processor 160. The memory 150 constitutes a storage and the processor 160 (and the memory 150) constitutes a controller. The UE 100 may not have the GNSS receiver 130. Furthermore, the memory 150 may be integrally formed with the processor 160, and this set (that is, a chipset) may be called a processor 160'.

The antennas 101 and the radio transceiver 110 are used to transmit and receive a radio signal. The radio transceiver 110 converts a baseband signal (transmission signal) output from the processor 160 into the radio signal, and transmits the radio signal from the antennas 101. Furthermore, the radio transceiver 110 converts the radio signal received by the antennas 101 into the baseband signal (received signal), and outputs the baseband signal to the processor 160.

The user interface 120 is an interface with a user carrying the UE 100, and includes, for example, a display, a microphone, a speaker, and various buttons. The user interface 120 receives an operation from a user and outputs a signal indicating the content of the operation to the processor 160. The GNSS receiver 130 receives a GNSS signal in order to obtain location information indicating a geographical location of the UE 100, and outputs the received signal to the processor 160. The battery 140 accumulates a power to be supplied to each block of the UE 100.

The memory 150 stores a program to be executed by the processor 160 and information to be used for a process by the processor 160. The processor 160 includes a baseband processor that performs modulation and demodulation, encoding and decoding and the like of the baseband signal, and a CPU (Central Processing Unit) that performs various processes by executing the program stored in the memory 150. The processor 160 may further include a codec that performs coding and decoding of sound and video signals. The processor 160 implements various processes and various communication protocols described later.

Fig. 3 is a block diagram of the eNB 200. As illustrated in Fig. 3, the eNB 200 includes a plurality of antennas 201, a radio transceiver 210, a network interface 220, a memory 230, and a processor 240. The memory 230 constitutes a storage and the processor 240 (and the memory 230) constitutes a controller.

The antennas 201 and the radio transceiver 210 are used to transmit and receive a radio signal. The radio transceiver 210 converts the baseband signal (transmission signal) output from the processor 240 into the radio signal, and transmits the radio signal from the antennas 201. Furthermore, the radio transceiver 210 converts the radio signal received by the antennas 201 into the baseband signal (received signal), and outputs the baseband signal to the processor 240.

The network interface 220 is connected to the neighboring eNB 200 via the X2 interface and is connected to the MME/S-GW 300 via the S1 interface. The network interface 220 is used in communication performed on the X2 interface and communication performed on the S1 interface.

The memory 230 stores a program to be executed by the processor 240 and information to be used for a process by the processor 240. The processor 240 includes a baseband processor that performs modulation and demodulation, encoding and decoding and the like of the baseband signal and a CPU that performs various processes by executing the program stored in the memory 230. The processor 240 implements various processes and various communication protocols described later.

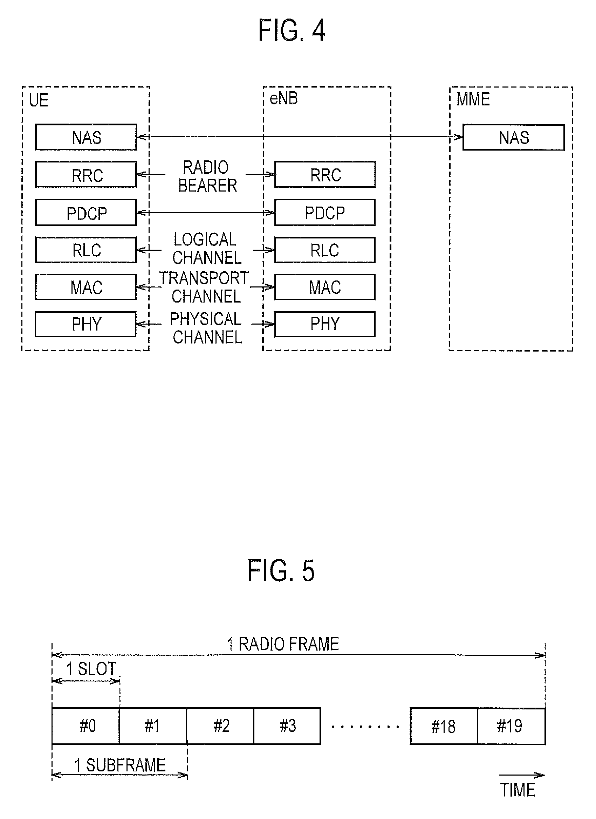

Fig. 4 is a protocol stack diagram of a radio interface in the LTE system. As illustrated in Fig. 4, a radio interface protocol is separated into first to third layers of an Open Systems Interconnection (OSI) reference model. The first layer is a physical (PHY) layer. The second layer includes a medium access control (MAC) layer, a radio link control (RLC) layer, and a packet data convergence protocol (PDCP) layer. The third layer includes a radio resource control (RRC) layer.

The PHY layer performs encoding and decoding, modulation and demodulation, antenna mapping and demapping, and resource mapping and demapping. Between the PHY layer of the UE 100 and the PHY layer of the eNB 200, user data and a control signal are transmitted via a physical channel.

The MAC layer performs data priority control, a retransmission process using a hybrid automatic repeat request (ARQ) (HARQ), and the like. Between the MAC layer of the UE 100 and the MAC layer of the eNB 200, user data and a control signal are transmitted via a transport channel. The MAC layer of the eNB 200 includes a scheduler for determining a transport format (transport block size and modulation and coding schemes) of an uplink and a downlink, and a resource block allocated to the UE 100.

The RLC layer transmits data to an RLC layer on a reception side using the functions of the MAC layer and the PHY layer. Between the RLC layer of the UE 100 and the RLC layer of the eNB 200, user data and a control signal are transmitted via a logical channel.

The PDCP layer performs header compression and decompression, and encryption and decryption.

The RRC layer is defined only in a control plane handling control signals. Between the RRC layer of the UE 100 and the RRC layer of the eNB 200, a control signal (an RRC message) for various settings is transmitted. The RRC layer controls the logical channel, the transport channel, and the physical channel in response to establishment, re-establishment, and release of a radio bearer. If there is connection (RRC connection) between the RRC of the UE 100 and the RRC of the eNB 200, the UE 100 is in a connected state (an RRC connected state). If not, the UE 100 is in an idle state (an RRC idle state).

A non-access stratum (NAS) layer located above the RRC layer performs session management, mobility management, and the like.

Fig. 5 is a configuration diagram of a radio frame used in the LTE system. In the LTE system, orthogonal frequency division multiple access (OFDMA) and single carrier frequency division multiple access (SC-FDMA) are applied to a downlink and an uplink, respectively.

As illustrated in Fig. 5, a radio frame is constituted by 10 subframes arranged in a time direction. Each subframe is constituted by 2 slots arranged in the time direction. The length of each subframe is 1 ms, and the length of each slot is 0.5 ms. Each subframe includes a plurality of resource blocks (RBs) in a frequency direction, and a plurality of symbols in the time direction. Each resource block includes a plurality of subcarriers in the frequency direction. A resource element (RE) is constituted by 1 subcarrier and 1 symbol. Among radio resources allocated to the UE 100, a frequency resource is constituted by RBs and a time resource is constituted by subframes (or slots).

In a downlink, a section corresponding to beginning several symbols of each subframe is a region used as a physical downlink control channel (PDCCH) for transmitting mainly a control signal, and a physical HARQ Indicator channel (PHICH). In addition, a remaining part of each subframe is a region that can be used as a physical downlink shared channel (PDSCH) for transmitting mainly user data. In addition, downlink reference signals such as cell specific reference signals (CRSs) are arranged in each subframe in a dispersed manner.

The control signal transmitted by the PDCCH includes, for example, uplink scheduling information (SI), downlink SI, and a transmit power control (TPC) bit. The uplink SI is scheduling information relating to allocation of an uplink radio resource, and also referred to as an uplink (UL) grant. The downlink SI is scheduling information relating to allocation of a downlink radio resource. The TPC bit is information indicating the increase and decrease of transmission power of the uplink. These types of information are referred to as downlink control information (DCI). The control signal transmitted by the PHICH is an acknowledge/negative acknowledge (ACK/NACK). The ACK/NACK is information indicating whether user data transmitted via a physical channel of an uplink (e.g., PUSCH) has been successfully decoded. The PDSCH conveys a control signal and/or user data. For example, a data region of the downlink may be allocated only to user data, or may be allocated in such a manner that user data and a control signal are multiplexed.

In an uplink, both end portions in the frequency direction of each subframe are regions used as a physical uplink control channel (PUCCH) for transmitting mainly a control signal. A remaining part of each subframe is a region that can be used as a physical uplink shared channel (PUSCH) for transmitting mainly user data. In addition, an uplink reference signal such as a sounding reference signal (SRS) is arranged in a predetermined symbol of each subframe.

The control signal transmitted by the PUCCH includes, for example, a channel quality indicator (CQI), a precoding matrix indicator (PMI), a rank indicator (RI), a scheduling request (SR), and the ACK/NACK. The CQI is an index indicating channel quality of the downlink, and is used for determining a recommended modulation scheme and an encoding ratio that are to be used in downlink transmission, and the like. The PMI is an index indicating a precoder matrix desirably used for transmitting the downlink. The RI is an index indicating the number of layers (the number of streams) available for transmitting the downlink. The SR is information for requesting allocation of an uplink radio resource (a resource block). The ACK/NACK is information indicating whether user data transmitted via a physical channel of a downlink (e.g., PDSCH) has been successfully decoded. The PUSCH conveys a control signal and/or user data. For example, a data region of the uplink may be allocated only to user data, or may be allocated in such a manner that user data and a control signal are multiplexed.

(Measurement Control Method According to First Embodiment)

Next, a measurement control method according to the first embodiment will be described.

The LTE system according to the first embodiment supports the MDT for automating measurement and collection using the UE 100. In the current specification of the MDT, the RSRP or the like that is collected through the MDT is an index indicating communication quality in a PHY layer, and is not an index directly indicating communication quality in upper layers (the MAC layer, the PLC layer, and the PDCP layer), that is, quality of service (QoS). Even though the communication quality in the PHY layer is high, if the QoS is low, user demand cannot be satisfied. Among QoS indicators, a packet delay (latency) is a quality indicator that a user can sense particularly easily. It is therefore desired to make the packet delay evaluable.

The measurement control method according to the first embodiment is a method for measuring a delay of a downlink packet transmitted from the eNB 200 to the UE 100 in the LTE system. The downlink packet is a packet transmitted via a data radio bearer (DRB), and is a packet handled in the MAC layer/PLC layer/PDCP layer corresponding to the second layer of the OSI reference model (layer 2 packet). In the first embodiment, the description will be given of an example case in which the downlink packet is a PDCP service data unit (SDU) that has reached the PDCP layer from the upper level of the PDCP layer.

The measurement control method according to the first embodiment includes the steps of, in the eNB 200, receiving location information indicating a geographical location of the UE 100, from the UE 100, measuring a downlink packet delay (hereinafter, referred to as "downlink latency") indicating a duration from a first time point at which the downlink packet has been generated to a second time point at which transmission confirmation (HARQ ACK) corresponding to the downlink packet has been received from the UE 100, and generating delay measurement information including the downlink latency and the location information by associating the downlink latency with the location information.

In the first embodiment, the eNB 200 calculates a downlink latency (i) of an ith downlink PDCP SDU that has reached the PDCP layer, using the following formula (1), for example:

$$\text{downlink latency (i)} = \text{tAck (i)} - \text{tArriv (i)} \dots \quad (1).$$

In the formula, tArriv (i) represents a time point at which the ith downlink PDCP SDU has reached the PDCP layer in the eNB 200 (first time point).

In addition, tAck (i) represents a time point at which the last HARQ ACK corresponding to the ith downlink PDCP SDU has been received from the UE 100 in the eNB 200 (second time point). The downlink PDCP SDU is divided in the RLC layer of the eNB 200, and combined in the RLC layer of the UE 100. Thus, the last HARQ ACK corresponding to the PDCP SDU means the last HARQ ACK among a plurality of HARQ ACKs corresponding to the divided respective data units (specifically, MAC protocol data units (PDUs)).

The measurement control method according to the first embodiment includes the step of, in the eNB 200, acquiring time information (time stamp) relating to a measurement timing of the downlink latency. The time information is, for example, a network absolute time. The eNB 200 includes the time information in the delay measurement information.

In the first embodiment, the description will be given of an example case in which the eNB 200 generates delay measurement information by measuring downlink latencies of the respective PDCP SDUs, and associating each of the measured downlink latencies of the respective PDCP SDUs with location information and time information.

Nevertheless, the eNB 200 may generate delay measurement information by measuring an average downlink latency of a plurality of PDCP SDUs for every predetermined number or predetermined duration, and associating each of the average downlink latencies with location information and time information.

Alternatively, the eNB 200 may generate delay measurement information by measuring an average downlink latency for every PDCP SDU group in which QoS class identifiers (QCIs) are identical, and associating each of the average downlink latencies with location information and time information.

(Operation Sequence According to First Embodiment)

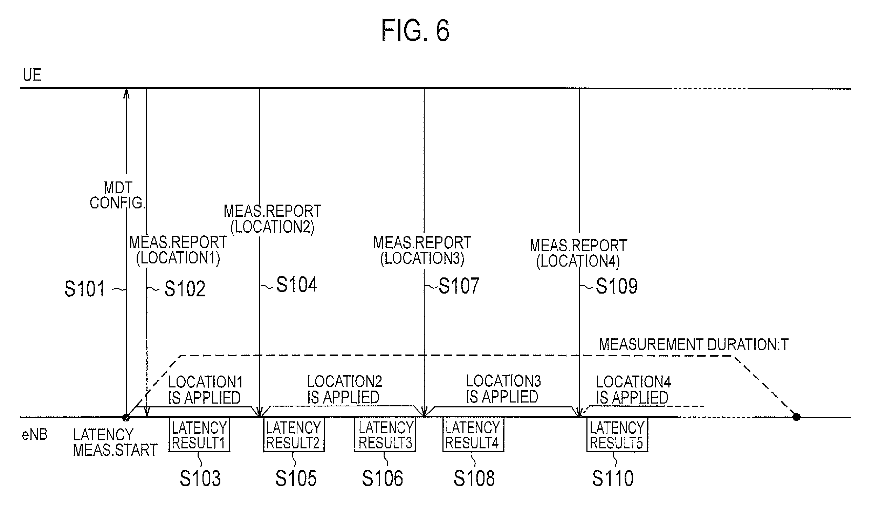

Next, an operation sequence according to the first embodiment will be described. Fig. 6 is a sequence diagram illustrating an operation sequence according to the first embodiment. It is assumed that, in an initial state in Fig. 6, the UE 100 is in a state in which the RRC connection with the eNB 200 has been established (connected state), and the UE 100 transmits and receives user data in a downlink.

As illustrated in Fig. 6, in step S101, the eNB 200 starts MDT measurement of a downlink latency. The eNB 200 transmits configuration information for configuring Immediate MDT, to the UE 100. The configuration information is transmitted and received in the RRC layers. More specifically, the configuration information is "includeLocationInfo" for requesting location information to be included in a measurement report (Meas. Report) for mobility control. Upon receiving the configuration information, the UE 100 includes its location information in a measurement report. The measurement report includes RSRP and/or reference signal received quality (RSRQ) of each of serving cells and neighboring cells.

In step S102, the UE 100 transmits the measurement report including its location information "Location1", to the eNB 200. Upon receiving the measurement report including the location information "Location1", the eNB 200 stores the location information "Location1".

In step S103, the eNB 200 measures a downlink latency 1 of a PDCP SDU1 according to Formula (1). The eNB 200 generates delay measurement information "Latency result1" by associating the measured downlink latency 1 with the lastly-received location information "Location1" and time information "Time1" relating to a measurement time, and stores the generated delay measurement information "Latency result1".

In step S104, the UE 100 transmits a measurement report including its location information "Location2", to the eNB 200. Upon receiving the measurement report including the location information "Location2", the eNB 200 stores the location information "Location2".

In step S105, the eNB 200 measures a downlink latency 2 of a PDCP SDU2 according to Formula (1). The eNB 200 generates delay measurement information "Latency result2" by associating the measured downlink latency 2 with the lastly-received location information "Location2" and time information "Time2" relating to a measurement time, and stores the generated delay measurement information "Latency result2".

In step S106, the eNB 200 measures a downlink latency 3 of a PDCP SDU3 according to Formula (1). The eNB 200 generates delay measurement information "Latency result3" by associating the measured downlink latency 3 with the lastly-received location information "Location2" and time information "Time 3" relating to a measurement time, and stores the generated delay measurement information "Latency result3".

In step S107 and subsequent steps, a procedure similar to the above-described measurement and collection procedure is repeated until an MDT measurement duration "T" ends.

Table 1 indicates an example of delay measurement information collected by the eNB 200 in the MDT measurement duration "T".

[Table 1]

| Result | Latency | Time stamp | Location | ... |
|---|---|---|---|---|
| 1 | latency result 1 | time 1 | location1 | ... |
| 2 | latency result 2 | time 2 | location2 | ... |
| 3 | latency result 3 | time 3 | location2 | ... |
| 4 | latency result 4 | time 4 | location3 | ... |
| 5 | latency result 5 | time 5 | location4 | ... |
| ... | ... | ... | ... | ... |

The eNB 200 notifies delay measurement information as indicated in Table 1, to the EPC 20. Based on the delay measurement information, the EPC 20 (i.e., an operator) optimizes a network for improving a downlink latency, by evaluating downlink latencies of the respective locations. Alternatively, the eNB 200 may use delay measurement information as indicated in Table 1, for optimizing its parameter, instead of transmitting the delay measurement information to the EPC 20.

(Summing-Up of First Embodiment)

As described above, the measurement control method according to the first embodiment includes the steps of, in the eNB 200, receiving location information indicating a geographical location of the UE 100, from the UE 100, measuring a downlink latency indicating a duration from a first time point at which the downlink packet has been generated to a second time point at which transmission confirmation (HARQ ACK) corresponding to the downlink packet has been received from the UE 100, and generating delay measurement information including the downlink latency and the location information by associating the downlink latency with the location information. With this configuration, delay measurement information of a downlink latency can be collected through the MDT.

[Second Embodiment]

A second embodiment will be described below mainly based on a difference from the first embodiment. A system configuration according to the second embodiment is similar to that according to the first embodiment.

(Measurement Control Method According to Second Embodiment)

A measurement control method according to the second embodiment is a method for measuring a delay of an uplink packet transmitted from the UE 100 to the eNB 200 in the LTE system. The uplink packet is a packet transmitted via a data radio bearer (DRB), and is a packet handled in the MAC layer/PLC layer/PDCP layer corresponding to the second layer of the OSI reference model (layer 2 packet). In the second embodiment, the description will be given of an example case in which the uplink packet is a PDCP SDU that has reached the PDCP layer from the upper level of the PDCP layer.

The measurement control method according to the second embodiment includes the steps of, in the eNB 200, receiving a buffer state report (BSR) indicating a data amount of the uplink packet accumulated in a buffer of the UE 100, from the UE 100, and measuring an uplink latency indicating a duration from a first time point at which the BSR has been received to a second time point. The second time point is a time point at which transmission confirmation (HARQ ACK) has been transmitted to the UE 100 in response to a data amount received from the UE 100 reaching the data amount indicated by the BSR.

In the second embodiment, the eNB 200 calculates an uplink latency (i) of an ith uplink PDCP SDU that has reached the PDCP layer of the UE 100, using the following formula (2), for example:

$$\text{uplink latency (i)} = \text{tAck (i)} - \text{tArriv (i)} \dots \quad (2).$$

In the formula, tArriv (i) represents a time point at which the eNB 200 has received a BSR corresponding to the ith uplink PDCP SDU newly-generated in the UE 100 (first time point).

In addition, tAck (i) represents a time point at which the last HARQ ACK corresponding to the ith uplink PDCP SDU has been transmitted to the UE 100 in the eNB 200 (second time point). The uplink PDCP SDU is divided in the RLC layer of the UE 100, and combined in the RLC layer of the eNB 200. Thus, the last HARQ ACK corresponding to the PDCP SDU means the last HARQ ACK among a plurality of HARQ ACKs corresponding to the divided respective MAC PDUs. More specifically, the eNB 200 monitors a data amount received from the UE 100, and the last HARQ ACK corresponding to the PDCP SDU refers to is an HARQ ACK corresponding to a MAC PDU received when the data amount has reached the data amount indicated by the BSR.

The measurement control method according to the second embodiment includes the steps of, in the eNB 200, receiving location information indicating a geographical location of the UE 100, from the UE 100, and generating delay measurement information including the uplink latency and the location information by associating the uplink latency with the location information.

In addition, the measurement control method according to the second embodiment includes the step of, in the eNB 200, acquiring time information (time stamp) relating to a measurement timing of the uplink latency. The time information is, for example, a network absolute time. The eNB 200 includes the time information in the delay measurement information.

In the second embodiment, the description will be given of an example case in which the eNB 200 generates delay measurement information by measuring uplink latencies of the respective PDCP SDUs, and associating each of the measured uplink latencies of the respective PDCP SDUs with location information and time information.

Nevertheless, the eNB 200 may generate delay measurement information by measuring an average uplink latency of a plurality of PDCP SDUs for every predetermined number or predetermined duration, and associating each of the average uplink latencies with location information and time information.

Alternatively, the eNB 200 may generate delay measurement information by measuring an average uplink latency for every PDCP SDU group in which QCIs are identical, and associating each of the average uplink latencies with location information and time information.

(Operation Sequence According to Second Embodiment)

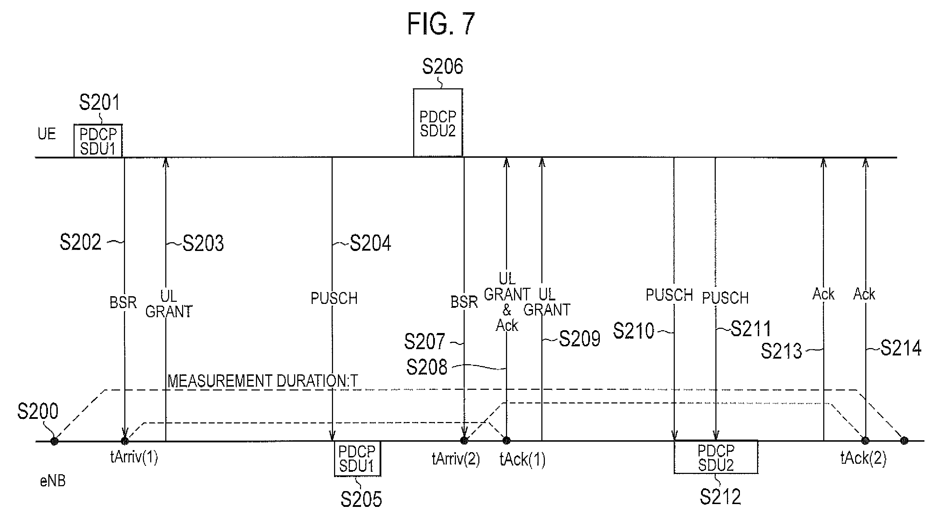

Next, an operation sequence according to the second embodiment will be described. Fig. 7 is a sequence diagram illustrating an operation sequence according to the second embodiment. It is assumed that, in an initial state in Fig. 7, the UE 100 is in a state in which the RRC connection with the eNB 200 has been established (connected state), and the UE 100 transmits and receives user data in an uplink.

As illustrated in Fig. 7, in step S200, the eNB 200 starts MDT measurement of an uplink latency. The eNB 200 transmits configuration information for configuring Immediate MDT, to the UE 100. The configuration information is transmitted and received in the RRC layers. More specifically, the configuration information is "includeLocationInfo" for requesting location information to be included in a measurement report (Meas. Report) for mobility control. Upon receiving the configuration information, the UE 100 includes its location information in a measurement report. In addition, in Fig. 7, the illustration of a measurement report transmitted from the UE 100 to the eNB 200 is omitted. In actuality, the UE 100 transmits a measurement report including its location information, to the eNB 200.

In step S201, a PDCP SDU1 reaches the PDCP layer of the UE 100. In other words, the PDCP SDU1 to be transmitted to the eNB 200 is generated in the UE 100.

In step S202, the UE 100 transmits a BSR indicating a data amount of the generated PDCP SDU1, to the eNB 200. The BSR is transmitted and received in the MAC layers. The eNB 200 activates a timer 1 at a reception time point "tArriv (1)" of the BSR.

Upon receiving the BSR, in step S203, based on the BSR, the eNB 200 transmits, to the UE 100, an UL grant for allocating an uplink radio resource to the UE 100.

Upon receiving the UL grant, in step S204, based on the UL grant, the UE 100 transmits, on the PUSCH, each MAC PDU corresponding to the PDCP SDU1, to the eNB 200.

Upon receiving each MAC PDU corresponding to the PDCP SDU1, in step S205, the eNB 200 reconstructs the PDCP SDU1 by connecting the received MAC PDUs.

In step S206, a PDCP SDU2 reaches the PDCP layer of the UE 100. In other words, the PDCP SDU2 to be transmitted to the eNB 200 is generated in the UE 100.

In step S207, the UE 100 transmits a BSR indicating a data amount of the generated PDCP SDU2, to the eNB 200. The eNB 200 activates a timer 2 at a reception time point "tArriv (2)" of the BSR.

Upon receiving the BSR, in step S208, based on the BSR, the eNB 200 transmits, to the UE 100, an UL grant for allocating an uplink radio resource to the UE 100. In addition, the eNB 200 transmits an HARQ ACK corresponding to the last MAC PDU received in step S204, to the UE 100. The eNB 200 stops the timer 1 at a transmission time point "tAck (1)" of the HARQ ACK, and measures an uplink latency I from the timer 1. The eNB 200 generates delay measurement information "Latency result1" by associating the measured uplink latency 1 with the lastly-received location information "Location1" and time information "Time 1" relating to a measurement time, and stores the generated delay measurement information "Latency result1".

Based on the BSR received from the UE 100 in step S207, in step S209, the eNB 200 transmits, to the UE 100, an UL grant for allocating an uplink radio resource to the UE 100.

Based on the UL grant received from the eNB 200 in step S208, in step S210, the UE 100 transmits, on the PUSCH, a part of MAC PDUs corresponding to the PDCP SDU2, to the eNB 200.

Based on the UL grant received from the eNB 200 in step S209, in step S211, the UE 100 transmits, on the PUSCH, remaining MAC PDUs corresponding to the PDCP SDU2, to the eNB 200.

Upon receiving each MAC PDU corresponding to the PDCP SDU2, in step S212, the eNB 200 reconstructs the PDCP SDU2 by connecting the received MAC PDUs.

In step S213, the eNB 200 transmits, to the UE 100, an HARQ ACK corresponding to the MAC PDU received from the UE 100 in step S210.

In step S214, the eNB 200 transmits, to the UE 100, an HARQ ACK corresponding to the MAC PDU received from the UE 100 in step S211 (i.e., the last HARQ ACK corresponding to the PDCP SDU2). The eNB 200 stops the timer 2 at a transmission time point "tAck (2)" of the HARQ ACK, and measures an uplink latency 2 from the timer 2. The eNB 200 generates delay measurement information "Latency result2" by associating the measured uplink latency 2 with the lastly-received location information "Location2" and time information "Time 2" relating to a measurement time, and stores the generated delay measurement information "Latency result2".

In subsequent steps, a procedure similar to the above-described measurement and collection procedure is repeated until the MDT measurement duration "T" ends. As a result, delay measurement information as indicated in Table 1 is collected. The eNB 200 notifies the collected delay measurement information to the EPC 20. Based on the delay measurement information, the EPC 20 (i.e., an operator) optimizes a network for improving an uplink latency, by evaluating uplink latencies of the respective locations. Alternatively, the eNB 200 may use the collected delay measurement information for optimizing its parameter, instead of transmitting the delay measurement information to the EPC 20.

(Summing-Up of Second Embodiment)

As described above, the measurement control method according to the second embodiment includes the steps of, in the eNB 200, receiving a BSR indicating a data amount of the uplink packet accumulated in a buffer of the UE 100, from the UE 100, and measuring an uplink latency indicating a duration from a first time point at which the BSR has been received to a second time point at which transmission confirmation (HARQ ACK) has been transmitted to the UE 100 in response to a data amount received from the UE 100 reaching the data amount indicated by the BSR. With this configuration, delay measurement information of an uplink latency can be collected through the MDT.

[Modified Example of Second Embodiment]

In the above-described second embodiment, an uplink latency is measured using a BSR. Here, the UE 100 manages data amounts accumulated in an uplink buffer for every priority (every QCI). In the current specification, if a new uplink packet with higher priority than that of existing data in an uplink buffer of the UE 100 is generated, a BSR is triggered. In contrast, if a new uplink packet with lower priority than that of the existing data is generated, a BSR is not triggered. It is therefore difficult to apply the measurement control method according to the second embodiment to a case of measuring a latency of an uplink packet with low priority.

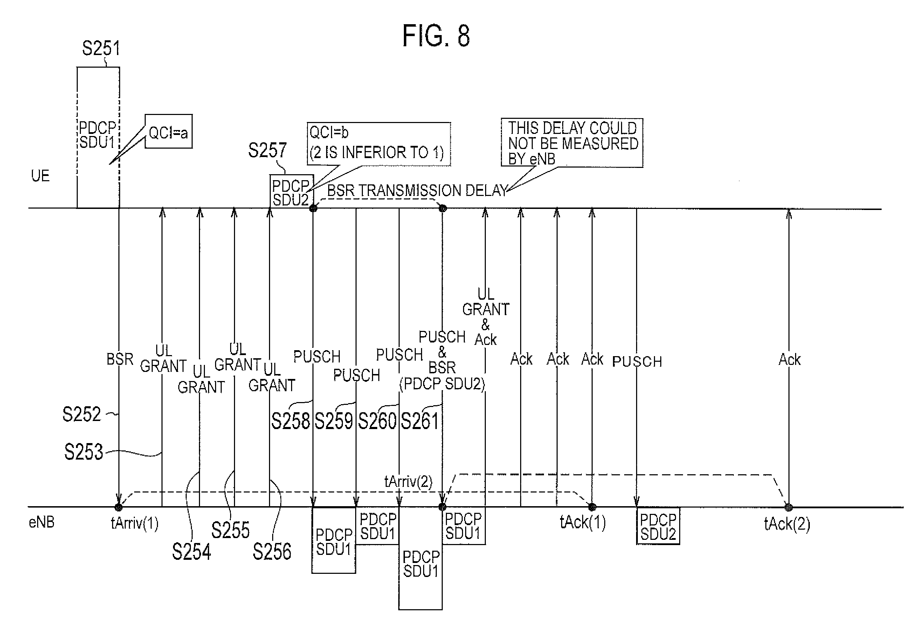

Fig. 8 is a sequence diagram illustrating an operation performed in a case in which an uplink packet with low priority is generated in the measurement control method according to the second embodiment. The description will now be given mainly based on a difference from the above-described second embodiment.

As illustrated in Fig. 8, in step S251, a PDCP SDU1 reaches the PDCP layer of the UE 100. In other words, the PDCP SDU1 to be transmitted to the eNB 200 is generated in the UE 100. The PDCP SDU1 belongs to CQI = "a".

In step S252, the UE 100 transmits a BSR indicating a data amount of the generated PDCP SDU1, to the eNB 200. The eNB 200 activates a timer 1 at a reception time point "tArriv (1)" of the BSR.

Upon receiving the BSR, in steps S253 to S256, based on the BSR, the eNB 200 transmits, to the UE 100, an UL grant for allocating an uplink radio resource to the UE 100.

In step S257, a PDCP SDU2 reaches the PDCP layer of the UE 100. In other words, the PDCP SDU2 to be transmitted to the eNB 200 is generated in the UE 100. The PDCP SDU2 belongs to CQI = "b", and the CQI "b" is a CQI with lower priority than that of the CQI "a". At this time point, each MAC PDU corresponding to the PDCP SDU1 is accumulated in the uplink buffer of the UE 100, so that a BSR is not triggered.

Upon receiving the UL grant, in steps S258 to S261, based on the UL grant, the UE 100 transmits, on the PUSCH, each MAC PDU corresponding to the PDCP SDU1, to the eNB 200. In step S261, the UE 100 transmits, to the eNB 200, a BSR indicating a data amount of the PDCP SDU2, in response to the transmission completion of the PDCP SDU1. The eNB 200 activates a timer 2 at a reception time point "tArriv (2)" of the BSR.

In this manner, a BSR transmission delay is generated in a period from a generation timing of the PDCP SDU2 (step S257) to a timing of transmitting the BSR indicating the data amount of the PDCP SDU2, to the eNB 200 (step S261). The eNB 200 fails to recognize the transmission delay, and activates the timer at a timing (step S261) different from the generation timing of the PDCP SDU2. Thus, a measured uplink latency of the PDCP SDU2 becomes an inaccurate value.

(Communication Control Method According to Modified Example of Second Embodiment)

In the modified example of the second embodiment, a special BSR different from a regular BSR is introduced for enabling a latency of an uplink packet with low priority to be accurately measured.

A measurement control method according to the modified example of the second embodiment includes the steps of transmitting, in the eNB 200, configuration information for configuring MDT measuring the uplink latency, to the UE 100, and transmitting, in the UE 100, a special BSR for the MDT (hereinafter, referred to as "BSR for MDT"), based on the configuration information. The BSR for MDT is basically used only in the MDT, and it is not preferable to use the BSR for MDT for scheduling.

The BSR for MDT includes information indicating a data amount of a new uplink packet with lower priority than that of existing data in the uplink buffer of the UE 100. The details of the BSR for MDT will be described later.

In addition, the measurement control method according to the modified example of the second embodiment includes the step of transmitting, even in a case in which priority of the new uplink packet is lower than that of existing data in the uplink buffer of the UE 100, the BSR for MDT including the information indicating the data amount of the new uplink packet, to the eNB 200.

(Operation Flow According to Modified Example of Second Embodiment)

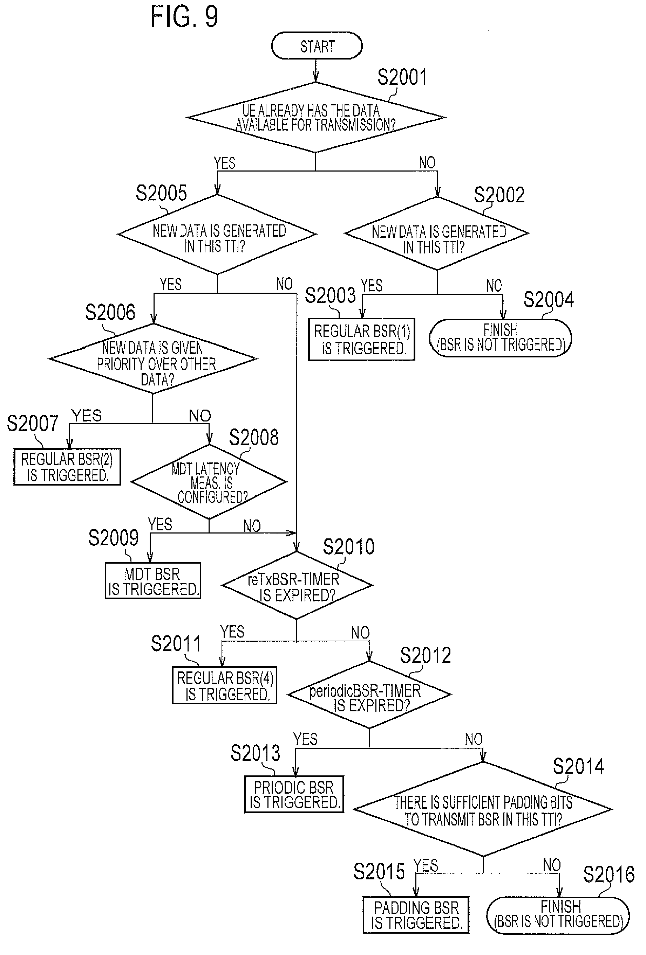

Fig. 9 is a flowchart illustrating an operation of the UE 100 according to the modified example of the second embodiment. This flow is executed in the MAC layer of the UE 100 for every transmission time interval (TTI).

As illustrated in Fig. 9, in step S2001, the UE 100 determines whether there is existing data (i.e., data available for transmission) in an uplink buffer.

If there is no existing data in the uplink buffer (step S2001; NO), in step S2002, the UE 100 determines whether new data is generated in this TTI. If new data is generated in this TTI (step S2002; YES), in step S2003, the UE 100 triggers a regular BSR. If new data is not generated in this TTI (step S2002; NO), since there is no data available for transmission, a BSR is not triggered (step S2004).

On the other hand, if there is existing data in the uplink buffer (step S2001; YES), in step S2005, the UE 100 determines whether new data is generated in this TTI. If new data is generated in this TTI (step S2005; YES), in step S2006, the UE 100 determines whether priority of the new data is higher than priority of the existing data. If priority of the new data is higher than priority of the existing data (step S2006; YES), in step S2007, the UE 100 triggers a regular BSR. If priority of the new data is not higher than priority of the existing data (step S2006; NO), in step S2008, the UE 100 determines whether MDT measuring an uplink latency is configured. If the MDT is configured (step S2008; YES), in step S2009, the UE 100 triggers a BSR for MDT.

If the MDT is not configured (step S2008; NO), or if new data is not generated in this TTI (step S2005; NO), in step S2010, the UE 100 determines whether a reTxBSR-Timer is expired. In addition, the reTxBSR-Timer is a timer used for detecting that a BSR has not been transmitted for a certain period. If the reTxBSR-Timer is expired (step S2010; YES), in step S2011, the UE 100 triggers a regular BSR.

If the reTxBSR-Timer is not expired (step S2010; NO), in step S2012, the UE 100 determines whether a periodicBSR-Timer is expired. In addition, the periodicBSR-Timer is a timer used for detecting a transmission timing of a periodic BSR. If the periodicBSR-Timer is expired (step S2012; YES), in step S2013, the UE 100 triggers a periodic BSR.

If the periodicBSR-Timer is not expired (step S2012; NO), in step S2014, the UE 100 determines whether there are sufficient padding bits to transmit a BSR in this TTI. If there are sufficient padding bits to transmit a BSR in this TTI (step S2014; YES), in step S2015, the UE 100 triggers a padding BSR. If there are not sufficient padding bits to transmit a BSR in this TTI (step S2014; NO), a BSR is not triggered (step 2016).

(BSR According to Modified Example of Second Embodiment)

Next, the BSR for MDT according to the modified example of the second embodiment will be described. The MAC protocol data unit (PDU) is mainly constituted by a MAC header and a MAC payload. The MAC header is constituted by MAC subheaders, and the MAC payload is constituted by a MAC control element, a MAC SDU, and a padding. Each MAC subheader is constituted by a logical channel ID (LCID) and a length (L) field. The LCID indicates whether a corresponding part of the MAC payload is a MAC control element, and indicates a logical channel to which a related MAC SDU belongs, if the corresponding part is not a MAC control element. The L field indicates a size of a related MAC SDU or MAC control element. In addition, the MAC control element is used for signaling of MAC levels. In an uplink, the MAC control element is used for provision of a BSR and for a power head room report indicating available power.

Table 2 indicates a configuration example of a MAC header of a BSR for MDT. Table 2 indicates an example case in which a BSR for MDT is indicated by "11000".

[Table 2]

| Index | LCID values |
|-------|-------------|
| 00000 | CCCH |
| ... | ... |
| 11000 | BSR for MDT |
|  | ... |
| 11110 | Long BSR |
| 11111 | Padding |

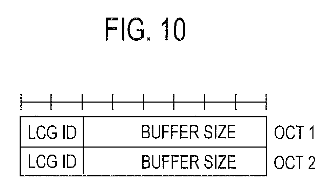

As a format of the BSR for MDT, an existing BSR format may be diverted, or a new BSR format may be defined. Fig. 10 is a diagram illustrating a configuration example of a new BSR format for the BSR for MDT. The example in Fig. 10 indicates buffer states of two logical channel groups (LCGs) with low priority.

Alternatively, a format for a Long BSR may be constantly used for the BSR for MDT. Alternatively, the BSR for MDT may be selectively used according to the situations, for effectively utilizing resources. For example, if generated data is 1 piece of data, only a buffer state of low priority data is notified using a format for a Short BSR, and if generated data are 2 pieces of data or more, notification is issued using a format for a Long BSR. Table 3 indicates a configuration example of a MAC header in this case. Table 2 indicates an example case in which a Short BSR for MDT is indicated by "10111", and a Long BSR for MDT is indicated by "11000".

[Table 3]

| Index | LCID values |
|-------|-------------|
| 00000 | CCCH |
| ... | ... |
| 10111 | Short BSR for MDT |
| 11000 | Long BSR for MDT |
| ... | ... |
| 11110 | Long BSR |

(continued)

| 11111 | Padding |
|---|---|

[Third Embodiment]

The third embodiment will be described below mainly based on a difference from the first and second embodiments. A system configuration according to the third embodiment is similar to that according to the first embodiment.

The third embodiment shares a common point with the second embodiment in that an uplink latency is measured. Nevertheless, the third embodiment differs from the second embodiment in that a measuring subject is the eNB 200 in the second embodiment, whereas a measuring subject is the UE 100 in the third embodiment.

A method by which the UE 100 in the idle state performs measurement and collection to store measurement information, and transmits the measurement information to a network later is defined in the current specification, and referred to as Logged MDT. In the third embodiment, the UE 100 in the connected state performs measurement and collection, and transmits measurement information to a network. Such a method is sometimes referred to as Logged MDT in Connected.

(Measurement Control Method According to Third Embodiment)

A measurement control method according to the third embodiment is a method for measuring a delay of an uplink packet transmitted from the UE 100 to the eNB 200 in the LTE system. The uplink packet is a packet transmitted via a data radio bearer (DRB), and is a packet handled in the MAC layer/PLC layer/PDCP layer corresponding to the second layer of the OSI reference model (layer 2 packet). In the second embodiment, the description will be given of an example case in which the uplink packet is a PDCP SDU that has reached the PDCP layer from the upper level of the PDCP layer.

The measurement control method according to the third embodiment includes the steps of, in the UE 100, measuring an uplink latency indicating a duration from a first time point subsequent to a timing at which the uplink packet has been generated to a second time point at which transmission confirmation (HARQ ACK) corresponding to the uplink packet has been received from the eNB 200, generating delay measurement information including the uplink latency, and transmitting the delay measurement information to the eNB 200.

In the third embodiment, the UE 100 calculates an uplink latency (i) of an ith uplink PDCP SDU that has reached the PDCP layer, using the following formula (3), for example:

$$\text{uplink latency (i)} = \text{tAck (i)} - \text{tArriv (i)} \dots \quad (3).$$

In the formula, tArriv (i) represents a time point at which the ith uplink PDCP SDU has reached the PDCP layer in the UE 100 (first time point). In other words, tArriv (i) is a generation time point at which the uplink PDCP SDU has been generated. Alternatively, tArriv (i) is a transmission time point at which a BSR reflecting the generated uplink PDCP SDU has been transmitted to the eNB 200. In this case, the UE 100 may measure a transmission delay (transmission delay of the BSR) indicating a duration from the generation time point to the transmission time point, and include the transmission delay in the delay measurement information.

In addition, tAck (i) represents a time point at which the last HARQ ACK corresponding to the ith uplink PDCP SDU has been received from the eNB 200 in the UE 100 (second time point). The uplink PDCP SDU is divided in the RLC layer of the UE 100, and combined in the RLC layer of the eNB 200. Thus, the last HARQ ACK corresponding to the uplink PDCP SDU means the last HARQ ACK among a plurality of HARQ ACKs corresponding to the divided MAC PDUs.

The measurement control method according to the third embodiment includes the step of, in the UE 100, acquiring location information indicating a geographical location of the UE 100. The UE 100 generates the delay measurement information including the uplink latency and the location information by associating the uplink latency with the location information.

In addition, the measurement control method according to the third embodiment includes the step of, in the UE 100, acquiring time information (time stamp) relating to a measurement timing of the uplink latency. Nevertheless, the UE 100 does not recognize a network absolute time. Thus, for example, a network absolute time is notified from the eNB 200 to the UE 100 using configuration information to be described below, and a lapse time from the network absolute time to a measurement timing is measured in the UE 100, whereby a set of the network absolute time and the lapse time is set as time information. The UE 100 includes the time information in the delay measurement information.

In the third embodiment, the description will be given of an example case in which the UE 100 generates delay measurement information by measuring uplink latencies of the respective PDCP SDUs, and associating each of the measured uplink latencies of the respective PDCP SDUs with location information and time information.

Nevertheless, the UE 100 may generate delay measurement information by measuring an average uplink latency of a plurality of PDCP SDUs for every predetermined number or predetermined duration, and associating each of the average uplink latencies with location information and time information.

Alternatively, the UE 100 may generate delay measurement information by measuring an average uplink latency for every PDCP SDU group in which QCIs are identical, and associating each of the average uplink latencies with location information and time information.

The measurement control method according to the third embodiment includes the step of, in the eNB 200, transmitting configuration information for configuring MDT measuring the uplink latency, to the UE 100. The configuration information can be an information element (e.g., "latencyMeas-setup") included in a LoggedMeasurementConfiguration message, which is a message for configuring the Logged MDT defined in the current specification. Alternatively, a message for configuring the Logged MDT in Connected may be newly defined, and the message may be set as the configuration information.

The configuration information for configuring the MDT measuring the uplink latency includes information designating a measurement duration (an MDT measurement duration) in which measurement of the uplink latency is to be performed. The UE 100 measures the uplink latency in the designated MDT measurement duration, and after the end of the measurement duration, transmits the delay measurement information to the eNB 200. In addition, by performing handover in the MDT measurement duration, in a case in which the MDT measurement duration ends in an eNB (a handover destination eNB) different from the eNB 200 that has transmitted the configuration information to the UE 100, the UE 100 may transmit the delay measurement information to the handover destination eNB. Thus, an identifier of an eNB/a cell in which measurement has been performed may be included in the delay measurement information for recording the eNB/cell in which measurement has been performed.

The measurement control method according to the third embodiment includes the step of, in the UE 100, in a case of being in a connected state at a time point at which the measurement duration has ended, transmitting a notification for transmitting the delay measurement information, to the eNB 200. The notification is a message (e.g., a LoggedMeasurementInCONNReportRequest message) requesting allocation of a radio resource for transmitting the delay measurement information. Alternatively, the notification may be information indicating that the delay measurement information can be transmitted, and an information element included in an RRCConnectionReestablishmentRequest message defined in the current specification.

The measurement control method according to the third embodiment includes the step of, in the UE 100, in a case of being in an idle state at a time point at which the measurement duration has ended, transmitting a notification for transmitting the delay measurement information, to the eNB 200, when transitioning from the idle state to a connected state. The notification is information indicating that a measurement log can be transmitted, similarly to the Logged MDT, and an information element (logmeasavailable) included in an RRCConnectionSetupComplete message. In addition, among measurement logs, a new information element (e.g., logMeasCONNAvailable) indicating that the delay measurement information can be transmitted may be defined. Based on the notification, the eNB 200 issues a request for acquiring the delay measurement information, to the UE 100. In response to the request, the UE 100 transmits the delay measurement information to the eNB 200.

In addition, in the UE 100, in a case of being in the connected state at a time point at which the measurement duration has ended, the UE 100 may transition to the idle state and transmit a notification for transmitting the delay measurement information, to the eNB 200, when transitioning from the idle state to the connected state.

In addition, in a case in which a long time (certain time) has elapsed in the idle state without the delay measurement information being transmitted, the UE 100 may discard stored delay measurement information. More specifically, the UE 100 can measure a time (holding time) for which the delay measurement information is stored, and in a case in which the holding time exceeds the certain time without the delay measurement information being transmitted, the UE 100 can discard the stored delay measurement information.

(Operation Sequence According to Third Embodiment)

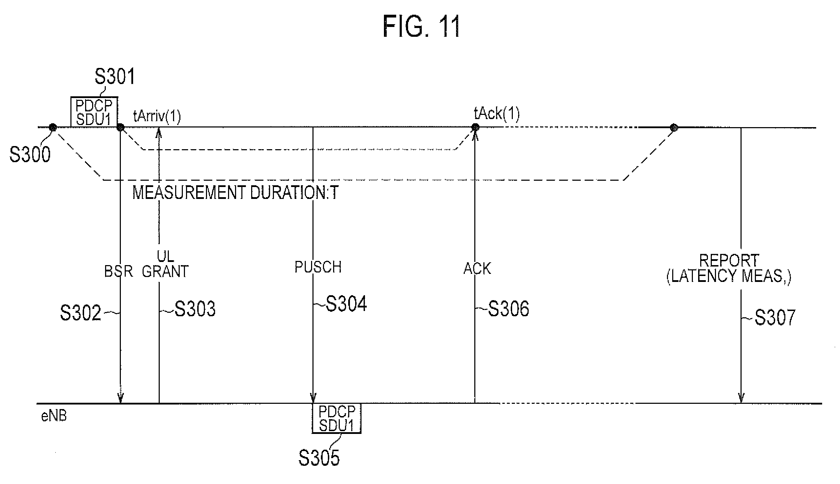

Next, an operation sequence according to the third embodiment will be described. Fig. 11 is a sequence diagram illustrating an operation sequence according to the third embodiment. It is assumed that, in an initial state in Fig. 11, the UE 100 is in a state in which the RRC connection with the eNB 200 has been established (connected state), and the UE 100 transmits and receives user data in an uplink.

As illustrated in Fig. 11, in step S300, the UE 100 starts MDT measurement of an uplink latency according to configuration information from the eNB 200.

In step S301, a PDCP SDU1 reaches the PDCP layer of the UE 100. In other words, the PDCP SDU1 to be transmitted to the eNB 200 is generated in the UE 100. The UE 100 activates a timer at a generation time point "tArriv (1)" of the PDCP SDU1.

In step S302, the UE 100 transmits a BSR indicating a data amount of the generated PDCP SDU1, to the eNB 200.

Upon receiving the BSR, in step S303, based on the BSR, the eNB 200 transmits, to the UE 100, an UL grant for allocating an uplink radio resource to the UE 100.

Upon receiving the UL grant, in step S304, based on the UL grant, the UE 100 transmits, on the PUSCH, each MAC PDU corresponding to the PDCP SDU1, to the eNB 200.

Upon receiving each MAC PDU corresponding to the PDCP SDU1, in step S305, the eNB 200 reconstructs the PDCP SDU1 by connecting the received MAC PDUs.

In step S306, the eNB 200 transmits an HARQ ACK corresponding to the last MAC PDU received in step S304, to the UE 100. Upon receiving the HARQ ACK, the UE 100 stops the timer at a reception time point "tAck (1)" of the HARQ ACK, and measures an uplink latency 1 from the timer. The UE 100 generates delay measurement information "Latency result1" by associating the measured uplink latency 1 with its location information "Location1" and time information "Time1" relating to a measurement time, and stores the generated delay measurement information "Latency resultl". In subsequent steps, a procedure similar to the above-described measurement and collection procedure is repeated until the MDT measurement duration "T" ends. As a result, delay measurement information as indicated in Table 1 is collected by the UE 100.

In step S307 subsequent to the end of the MDT measurement duration "T", the UE 100 transmits the stored delay measurement information to the eNB 200.

(Summing-Up of Third Embodiment)

As described above, the measurement control method according to the third embodiment includes the steps of, in the UE 100, measuring an uplink latency indicating a duration from a first time point subsequent to a timing at which an uplink packet has been generated to a second time point at which transmission confirmation (HARQ ACK) corresponding to the uplink packet has been received from the eNB 200, generating delay measurement information including the uplink latency, and transmitting the delay measurement information to the eNB 200. With this configuration, delay measurement information of an uplink latency can be collected by the MDT.

[Other Embodiments]

In the above-described first and second embodiments, the description has been given of an example case in which latency measurement is performed in the eNB 200. Alternatively, a network apparatus superior to the eNB 200 may perform latency measurement.

In addition, in the above-described embodiments, an LTE system has been described as an example of a mobile communication system. The mobile communication system, however, is not limited to the LTE system. The present invention may be applied to a system other than the LTE system.

[Cross-Reference]

Japanese Patent Application No. 2013-264614 (filed December 20, 2013) is incorporated by reference herein in its entirety.

INDUSTRIAL APPLICABILITY

The present invention is useful in a mobile communication field.

**Claims**

1. A measurement control method for measuring a delay of a downlink packet transmitted from a network to a user terminal in a mobile communication system, the measurement control method comprising steps of:

   in the network,
   receiving location information indicating a geographical location of the user terminal, from the user terminal;
   measuring a downlink packet delay indicating a duration from a first time point at which the downlink packet has been generated to a second time point at which transmission confirmation corresponding to the downlink packet has been received from the user terminal; and

generating delay measurement information including the downlink packet delay and the location information by associating the downlink packet delay with the location information.

2. The measurement control method according to claim 1, further comprising a step of, in the network, acquiring time information relating to a measurement timing of the downlink packet delay,
wherein the delay measurement information further includes the time information.

3. A measurement control method for measuring a delay of an uplink packet transmitted from a user terminal to a network in a mobile communication system, the measurement control method comprising steps of:

in the network,
receiving a buffer state report indicating a data amount of the uplink packet accumulated in a buffer of the user terminal, from the user terminal; and
measuring an uplink packet delay indicating a duration from a first time point at which the buffer state report has been received to a second time point,

wherein the second time point is a time point at which transmission confirmation has been transmitted to the user terminal in response to a data amount received from the user terminal reaching the data amount indicated by the buffer state report.

4. The measurement control method according to claim 3, further comprising steps of:

in the network,
receiving location information indicating a geographical location of the user terminal, from the user terminal; and
generating delay measurement information including the uplink packet delay and the location information by associating the uplink packet delay with the location information.

5. The measurement control method according to claim 4, further comprising a step of, in the network, acquiring time information relating to a measurement timing of the uplink packet delay,
wherein the delay measurement information further includes the time information.

6. The measurement control method according to claim 3, further comprising steps of:

transmitting, in the network, configuration information for configuring MDT measuring the uplink packet delay, to the user terminal; and
transmitting, in the user terminal, a special buffer state report for the MDT as the buffer state report, based on the configuration information.

7. The measurement control method according to claim 6, wherein the special buffer state report includes information indicating a data amount of a new uplink packet with lower priority than that of existing data in the buffer.

8. The measurement control method according to claim 7, further comprising the steps of:

in the user terminal,
managing data amounts accumulated in the buffer for every priority; and
transmitting, even in a case in which priority of the new uplink packet is lower than that of existing data in the buffer, the special buffer state report including the information indicating the data amount of the new uplink packet, to the network.

9. A measurement control method for measuring a delay of an uplink packet transmitted from a user terminal to a network in a mobile communication system, the measurement control method comprising steps of:

in the user terminal,
measuring an uplink packet delay indicating a duration from a first time point subsequent to a timing at which the uplink packet has been generated to a second time point at which transmission confirmation corresponding to the uplink packet has been received from the network;
generating delay measurement information including the uplink packet delay; and
transmitting the delay measurement information to the network.

**10.** The measurement control method according to claim 9, wherein the first time point is a generation time point at which the uplink packet has been generated, or a transmission time point at which a buffer state report reflecting the generated uplink packet has been transmitted to the network.

**11.** The measurement control method according to claim 10, wherein
the measurement step includes a step of measuring a transmission delay indicating a duration from the generation time point to the transmission time point, and
the generation step includes a step of including the transmission delay in the delay measurement information.

**12.** The measurement control method according to claim 9, further comprising step of, in the user terminal, acquiring location information indicating a geographical location of the user terminal,
wherein the generation step includes a step of generating delay measurement information including the uplink packet delay and the location information by associating the uplink packet delay with the location information.

**13.** The measurement control method according to claim 12, further comprising a step of, in the user terminal, acquiring time information relating to a measurement timing of the uplink packet delay,
wherein the delay measurement information further includes the time information.

**14.** The measurement control method according to claim 9, further comprising a step of, in the network, transmitting configuration information for configuring MDT measuring the uplink packet delay, to the user terminal, wherein
the configuration information includes information designating a measurement duration in which measurement of the uplink packet delay is to be performed,
the measurement step includes a step of measuring the uplink packet delay in the measurement duration, and
the transmission step includes a step of transmitting the delay measurement information to the network after an end of the measurement duration.

**15.** The measurement control method according to claim 14, further comprising a step of, in the user terminal, in a case of being in a connected state at a time point at which the measurement duration has ended, transmitting a notification for transmitting the delay measurement information, to the network.

**16.** The measurement control method according to claim 14, further comprising a step of, in the user terminal, in a case of being in an idle state at a time point at which the measurement duration has ended, transmitting a notification for transmitting the delay measurement information, to the network, when transitioning from the idle state to a connected state.

# FIG. 1

# FIG. 2

# FIG. 3

# FIG. 4

# FIG. 5

## FIG. 6

FIG. 7

EP 3 086 592 A1

# FIG. 8

EP 3 086 592 A1

FIG. 9

START

S2001

UE ALREADY HAS THE DATA
AVAILABLE FOR TRANSMISSION?

YES — S2005

NEW DATA IS GENERATED
IN THIS TTI?

NO — S2002

NEW DATA IS GENERATED
IN THIS TTI?

YES — S2003

REGULAR BSR(1)
IS TRIGGERED.

NO — S2004

FINISH
(BSR IS NOT TRIGGERED)

YES — S2006

NEW DATA IS GIVEN
PRIORITY OVER OTHER
DATA?

NO

YES — S2007

REGULAR BSR(2)
IS TRIGGERED.

NO — S2008

MDT LATENCY
MEAS. IS
CONFIGURED?

YES — S2009

MDT BSR
IS TRIGGERED.

NO — S2010

reTxBSR-TIMER
IS EXPIRED?

YES — S2011

REGULAR BSR(4)
IS TRIGGERED.

NO — S2012

periodicBSR-TIMER
IS EXPIRED?

YES — S2013

PRIODIC BSR
IS TRIGGERED.

NO — S2014

THERE IS SUFFICIENT PADDING BITS
TO TRANSMIT BSR IN THIS TTI?

YES — S2015

PADDING BSR
IS TRIGGERED.

NO — S2016

FINISH
(BSR IS NOT TRIGGERED)

FIG. 10

| LCG ID | BUFFER SIZE | OCT 1 |
| LCG ID | BUFFER SIZE | OCT 2 |

# FIG. 11

EP 3 086 592 A1

## INTERNATIONAL SEARCH REPORT

| International application No. |
| --- |
| PCT/JP2014/083512 |

**A. CLASSIFICATION OF SUBJECT MATTER**
*H04W24/08*(2009.01)i, *H04W16/18*(2009.01)i, *H04W24/10*(2009.01)i, *H04W64/00* (2009.01)i

According to International Patent Classification (IPC) or to both national classification and IPC

**B. FIELDS SEARCHED**

Minimum documentation searched (classification system followed by classification symbols)
H04W24/08, H04W16/18, H04W24/10, H04W64/00

Documentation searched other than minimum documentation to the extent that such documents are included in the fields searched

| | | | |
| --- | --- | --- | --- |
| Jitsuyo Shinan Koho | 1922–1996 | Jitsuyo Shinan Toroku Koho | 1996–2015 |
| Kokai Jitsuyo Shinan Koho | 1971–2015 | Toroku Jitsuyo Shinan Koho | 1994–2015 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X<br>Y<br>A | CATT, "Possible Measurement Types for MDT QoS Verification", 3GPP TSG RAN WG2 Meeting #77 R2-120772, 2012.01.31 [online], [retrieved on 2015-03-06], Retrieved from the Internet <URL: http://www.3gpp.org/ftp/tsg_ran/wg2_rl2/TSGR2_77/Docs/R2-120772.zip> | 1-2,9-12<br>13-16<br>3-8 |
| Y | JP 2013-539328 A (Samsung Electronics Co., Ltd.),<br>17 October 2013 (17.10.2013),<br>paragraphs [0028] to [0029]<br>& US 2012/0083263 A1   & EP 2625893 A2<br>& WO 2012/046985 A2   & KR 10-2012-0035028 A | 13-16 |

☒ Further documents are listed in the continuation of Box C.   ☐ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>06 March 2015 (06.03.15) | Date of mailing of the international search report<br>17 March 2015 (17.03.15) |
| --- | --- |
| Name and mailing address of the ISA/<br>Japan Patent Office<br>3-4-3,Kasumigaseki,Chiyoda-ku,<br>Tokyo 100-8915,Japan | Authorized officer<br><br>Telephone No. |

Form PCT/ISA/210 (second sheet) (July 2009)

**INTERNATIONAL SEARCH REPORT**

| International application No. |
| --- |
| PCT/JP2014/083512 |

C (Continuation). DOCUMENTS CONSIDERED TO BE RELEVANT

| Category* | Citation of document, with indication, where appropriate, of the relevant passages | Relevant to claim No. |
| --- | --- | --- |
| A | Samsung, "Packet delay measurement for Rel-11 MDT", 3GPP TSG RAN WG2 #77bis R2-121266, 2012. 03.20 [online], [retrieved on 2015-03-06], Retrieved from the Internet <URL: http://www. 3gpp.org/ftp/tsg_ran/wg2_rl2/TSGR2_77bis/Docs/ R2-121266.zip> | 1-16 |
| A | Samsung, Assessing User QoS Experience in different location, 3GPP TSG-RAN WG2 Meeting #77 R2-120234, 2012.01.31 [online], [retrieved on 2015-03-06], Retrieved from the Internet <URL: http://www.3gpp.org/ftp/tsg_ran/wg2_rl2/ TSGR2_77/Docs/R2-120234.zip> | 1-16 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2013264614 A

**Non-patent literature cited in the description**

• TS37.320 V11.3.0. *3GPP Technical Report,* March 2013